# FASCICULE DE BREVET EUROPEEN

(11) **EP 0 648 316 B1**
(45) Date de publication et mention de la délivrance du brevet: **13.03.1996**
(21) Numéro de dépôt: 93913120.7
(22) Date de dépôt: 14.06.1993
(51) Int. Cl.: F16D 55/2265, F16B 19/02, E05C 5/02

(54) **DISPOSITIF DE LIAISON A RAPPEL ELASTIQUE**
VERBINDUNGSVORRICHTUNG MIT ELASTISCHERRÜCKSTELLUNG
SPRING RETAINER SYSTEM

(30) Priorité: 08.07.1992 FR 9208421
(43) Date de publication de la demande: 19.04.1995
(73) Titulaire: ALLIEDSIGNAL EUROPE SERVICES TECHNIQUES, F-93700 Drancy (FR)
(72) Inventeur: LE DEIT, Gérard, F-77181 Courty (FR); HULLIGER, Claude, F-60520 Thiers-sur-Thève (FR); GERARD, Jean-Louis, F-93170 Bagnolet (FR)
(74) Mandataire: Bentz, Jean-Paul
(86) Numéro de dépôt international: FR9300564
(87) Numéro de publication internationale: WO9401694

(56) Documents cités:
- EP-A- 0 357 469
- DE-A- 2 851 590
- FR-A- 687 615
- FR-A- 2 117 636
- GB-A- 2 020 731
- US-A- 3 196 549

## Description

La présente invention concerne un dispositif de liaison d'une chape et d'un étrier d'un frein à disque à étrier coulissant, comprenant des premier et second logements d'axe commun respectivement formés dans la chape et l'étrier , ainsi qu'une clavette insérée axialement dans le premier logement avec un jeu relativement faible et dans le second logement avec un jeu relativement important et un organe de maintien de la clavette.

Des dispositifs de ce type sont utilisés depuis très longtemps en mécanique et dans tous les domaines de l'industrie.

Un exemple particulier en est donné par le brevet US 4 936 422 qui concerne un frein à disque à étrier coulissant et à colonnette unique, et qui illustre le domaine d'application privilégié de la présente invention.

Lorsqu'il s'agit de rendre solidaires l'une de l'autre deux pièces telles que la chape et l'étrier coulissant d'un frein à disque, il est en effet nécessaire, en raison des tolérances de fabrication, de prévoir que la clavette rentre avec un jeu relativement important dans l'une des deux pièces, faute de quoi l'assemblage risque d'être impossible.

Néanmoins dans certaines applications, et en particulier dans le cas de freins ainsi assemblés et soumis à des conditions d'utilisation extrêmes, le jeu entre la clavette et la seconde pièce, donc entre les deux pièces, est générateur de bruit et fait apparaître un risque d'usure prématurée résultant, aux accélérations importantes et de sens alternés, d'un martèlement des deux pièces l'une contre l'autre.

Le but de la présente invention est précisément d'éviter ce phénomène et d'éliminer les effets dont il est responsable.

A cette fin, le dispositif de l'invention est essentiellement caractérisé en ce que l'organe de maintien de la clavette est en fil de ressort et en ce que le second logement et la clavette adoptant au moins partiellement la forme de cylindres à bases non circulaires dont chacun présente des diamètres minimal et maximal différents, les diamètres du second logement étant supérieurs aux diamètres correspondants de la clavette et le diamètre maximal de celle-ci étant supérieur au diamètre minimal du second logement, et en ce que ce dispositif comprend en outre un organe de maintien, s'appuyant sur l'une des deux pièces et exerçant sur la clavette un couple élastique de torsion autour dudit axe commun, tendant à aligner le diamètre maximal de la clavette et le diamètre minimal du second logement.

Dans le cas où les première et seconde pièces sont respectivement constituées par la chape et l'étrier d'un frein à disque à étrier coulissant, l'organe de maintien est de préférence constitué par un fil ressort rendu solidaire de la clavette et de la chape respectivement en des premier et second points de fixation espacés l'un de l'autre par une portion de longueur de ce fil, et cette portion de longueur s'étend au moins partiellement suivant une direction différente de celle dudit axe commun pour être soumise à une flexion lors d'un coulissement de l'étrier résultant d'une action de freinage, et pouvoir ainsi ramener ce dernier à la fin de cette action.

Selon un mode de réalisation facile à mettre en oeuvre, le premier point de fixation est obtenu par l'introduction du fil ressort dans un alésage transversal pratiqué dans la clavette.

Si le fil ressort est coudé à la sortie de l'alésage transversal suivant un angle tel que le coulissement de l'étrier provoque une rotation du fil ressort dans l'alésage, alors le fil ressort est avantageusement appuyé sur la chape en un point de rotation situé, suivant la longueur de ce fil, entre les premier et second points de fixation, et le second point de fixation est situé à distance du plan formé par ledit axe commun et ledit point de rotation.

D'autres caractéristiques et avantages de l'invention ressortiront clairement de la description qui en est faite ci-après, à titre indicatif et nullement limitatif, en référence au dessin annexé dans lequel :
- La Figure 1 est une vue de dessus d'un frein à disque à étrier coulissant utilisant un dispositif conforme à l'invention ;
- La Figure 2 est une vue de face du frein de la Figure 1 ;
- La Figure 3 est une vue de détail en coupe réalisée suivant la ligne III-III de la Figure 1 ; et
- La Figure 4 est une vue semblable à celle de la Figure 3, réalisée à une échelle agrandie et suivant un plan de coupe légèrement différent, et représentant une clavette de section également légèrement différente.

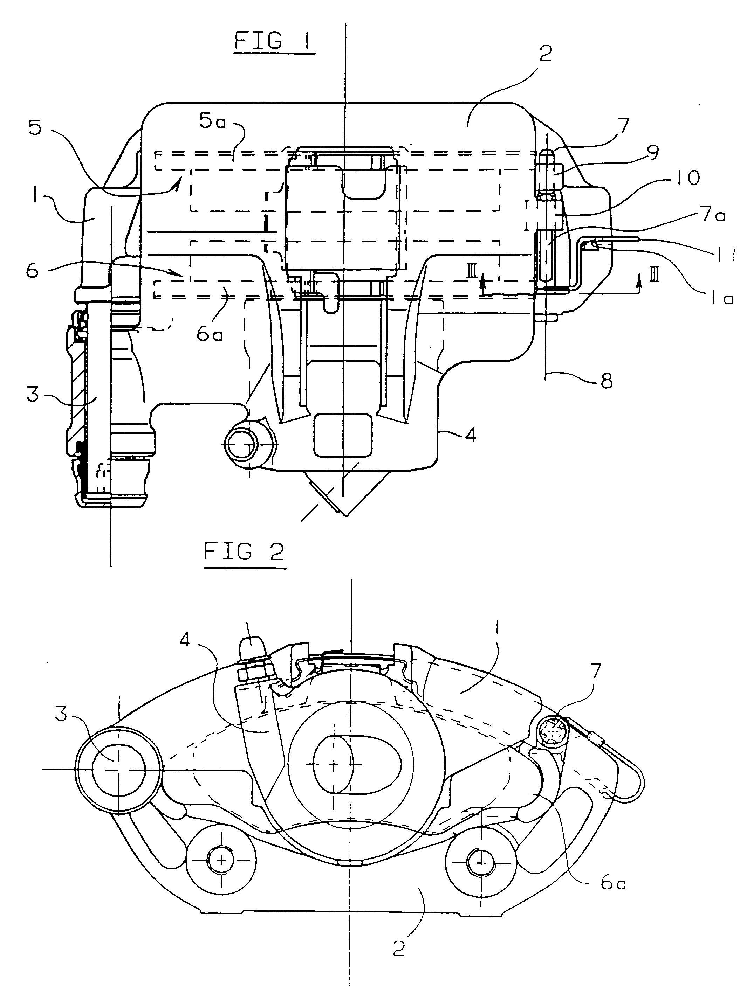

Le frein à disque représenté aux Figures 1 et 2 est du type comportant une chape 1 et un étrier 2 monté coulissant sur cette chape au moyen d'une colonnette axiale 3.

Un moteur hydraulique de frein 4, solidaire de l'étrier 2 est susceptible d'appliquer sur un disque (non représenté), solidaire d'une roue d'un véhicule à freiner, deux organes de friction 5 et 6 montés sur le frein au moyen de plaques support respectives 5a et 6a.

La chape 1 et l'étrier 2, qui sont susceptibles de tourner l'un par rapport à l'autre autour de la colonnette 3 formant charnière, sont rendus solidaires l'un de l'autre en rotation au moyen d'une clavette 7 engagée suivant un axe 8 dans au moins un logement 9 de la chape 1 et un logement 10 de l'étrier 2.

Alors que le jeu de la clavette 7 dans le premier logement 9 est infime, le jeu de cette clavette dans le logement 10 de l'étrier est relativement important de manière notamment à rattraper les tolérances de fabrication du frein et ses déformations sous contrainte.

L'invention a notamment pour but d'éviter que le jeu nécessairement important entre la clavette 7 et le logement 10 devienne, dans des conditions extrêmes, source de bruit et cause d'usure.

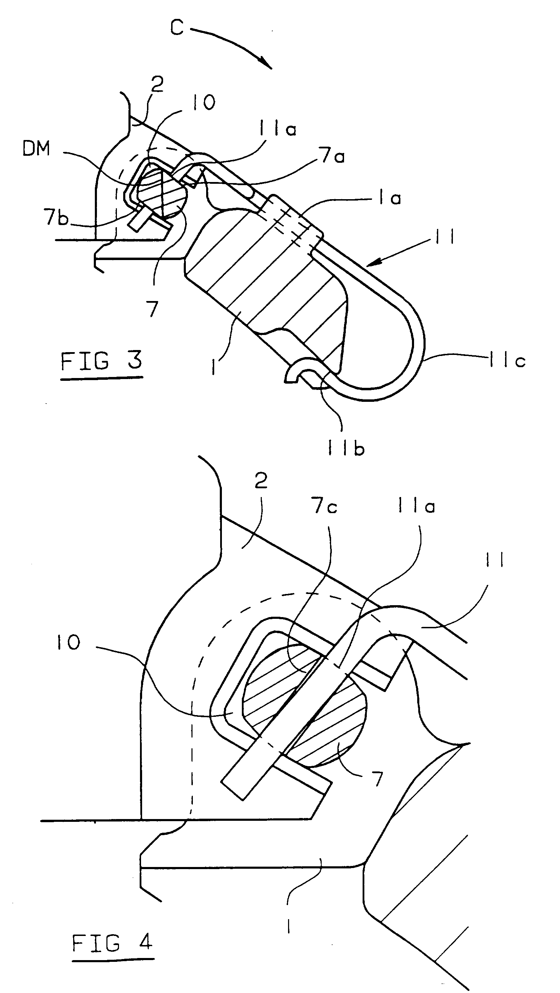

Les moyens mis en oeuvre par l'invention pour résoudre ce problème sont illustrés de façon spécifique par les Figures 3 et 4.

Plus précisément, le second logement 10 et la clavette 7 adoptent, au moins à leur voisinage mutuel, la forme de cylindres à bases non circulaires, dont chacun présente des diamètres minimal et maximal différents.

En d'autres termes, non seulement leur section adopte une forme non circulaire, mais en outre deux droites parallèles tangentes à cette section présentent entre elles un écartement qui varie en fonction de leur direction.

De ce fait, on entend ici par "diamètre minimal", pour chaque élément considéré (à savoir la clavette 7 d'une part et le logement 10 d'autre part), la distance minimale que peuvent présenter entre elles ces deux droites parallèles tout en restant tangentes à la section de cet élément, associée à la direction que prennent ces deux droites lorsqu'elles sont à cette distance l'une de l'autre.

Comme on le comprendra aisément, la définition de "diamètre maximal" peut être extrapolée de la précédente.

Selon l'invention, les diamètres minimal et maximal du second logement 10 sont respectivement supérieurs aux diamètres minimal et maximal de la clavette 7, mais le diamètre maximal de celle-ci est supérieur au diamètre minimal du second logement 10.

Comme le montrent les Figures 1 et 3, la clavette 7 peut par exemple adopter la forme d'un cylindre à base circulaire modifié par deux méplats parallèles 7a et 7b, et le logement 10 peut être de forme essentiellement rectangulaire et éventuellement ouvert.

Le dispositif de l'invention comprend par ailleurs un organe de maintien adoptant par exemple la forme d'un fil ressort 11 inséré dans un alésage transversal 7c de la clavette 7, le point d'insertion constituant un premier point de fixation 11a pour le fil ressort 11.

Ce fil 11, qui s'appuie sur la chape en un second point de fixation 11b, a pour fonction d'exercer sur la clavette 7 un couple élastique de torsion, repéré par la flèche C, autour de l'axe commun 8, tendant à aligner le diamètre maximal DM de la clavette 7 avec le diamètre minimal du second logement, qui a la direction de la largeur du rectangle que forme ce dernier.

Selon une autre caractéristique importante de l'invention, la portion de la longueur du fil 11 qui sépare les points de fixation 11a et 11b s'étend au moins partiellement suivant une direction différente de celle de l'axe 8, pour pouvoir être soumise à une flexion lors du coulissement de l'étrier 2 sous l'effet d'une action de freinage, et pouvoir ainsi ramener l'étrier au voisinage au moins de sa position de départ après la fin de l'action de freinage.

Comme le montrent les Figures 3 et 4, le fil ressort 11 est par exemple coudé à la sortie de l'alésage 7c et s'appuie en outre (Figures 1 et 3) sur un point de rotation 1a qui est formé par un relief de la chape 1 et se trouve situé, suivant la longueur du fil 11, entre les premier et second points de fixation 11a, 11b.

Par ailleurs, le fil ressort 11 attaque de préférence le second point de fixation 11b par l'intermédiaire d'une boucle 11c, de sorte que ce second point de fixation est situé à distance du plan passant par l'axe 8 et le point de rotation 1a, ce qui permet une légère sollicitation du fil ressort 11 en torsion et augmente la capacité de ce fil à ramener l'étrier en position après un coulissement sur la colonnette 3.

Enfin, comme le montre la Figure 4, la clavette 7 peut avantageusement présenter une section plus évoluée que celle d'un segment de cercle et notamment dépourvue de points anguleux.

## Revendications

1. Dispositif de liaison d'une chape (1) et d'un étrier (2) d'un frein à disque à étrier coulissant, comprenant des premier et second logements (9, 10) d'axe commun (8) respectivement formés dans la chape (1) et l'étrier (2), une clavette (7) insérée axialement dans le premier logement avec un jeu relativement faible et dans le second logement avec un jeu relativement important, et un organe de maintien (11) de la clavette (7) caractérisé en ce que l'organe de maintien (11) de la clavette (7) est en fil ressort et en ce que le second logement et la clavette adoptent au moins partiellement la forme de cylindres à bases non circulaires dont chacun présente des diamètres minimal et maximal différents, les diamètres du second logement étant supérieurs aux diamètres correspondants de la clavette et le diamètre maximal (DM) de celle-ci étant supérieur au diamètre minimal du second logement, l'organe de maintien (11), s'appuyant en deux points (11b, 1a) sur l'une des deux pièces et exerçant sur la clavette un couple élastique de torsion autour dudit axe commun, tendant à aligner le diamètre maximal (DM) de la clavette et le diamètre minimal du second logement.

2. Dispositif de liaison suivant la revendication 1, caractérisé en ce que le fil ressort (11) est rendu solidaire de la clavette et de la chape respectivement en des premier et second points de fixation (11a, 11b) espacés l'un de l'autre par une portion de longueur de ce fil s'étendant au moins partiellement suivant une direction différente de celle dudit axe commun (8) pour être soumise à une flexion lors d'un coulissement de l'étrier résultant d'une action de freinage, et pouvoir ainsi ramener ce dernier à la fin de cette action.

3. Dispositif suivant la revendication 2, caractérisé en ce que le premier point de fixation (11a) est obtenu par l'introduction du fil ressort dans un alésage transversal (7c) pratiqué dans la clavette.

4. Dispositif suivant la revendication 3, caractérisé en ce que le fil ressort est coudé à la sortie dudit alésage transversal, en ce qu'il est appuyé sur la chape en un point de rotation (1a) situé, suivant la longueur de ce fil, entre les premier et second points de fixation, et en ce que le second point de fixation est situé à distance du plan formé par ledit axe commun et ledit point de rotation.

## Patentansprüche

1. Vorrichtung zum Verbinden eines Bügels (1) mit einem Bremssattel (2) einer Schwimmsattel-Scheibenbremse, mit einer ersten und einer zweiten Aufnahme (9, 10) mit gemeinsamer Achse (8), welche in dem Bügel (1) bzw. dem Bremssattel (2) ausgebildet sind, sowie einem Splint (7), der axial in die erste Aufnahme mit einem relativ geringen Spiel und in die zweite Aufnahme mit einem relativ großen Spiel eingebracht ist, und einem Halteorgan (11) für den Splint (7), dadurch gekennzeichnet, daß das Halteorgan (11) des Splints (7) aus Federdraht besteht und daß die zweite Aufnahme und der Splint wenigstens teilweise die Form von Zylindern mit nicht-kreisförmigen Grundflächen aufweisen, von denen jeder unterschiedliche Minimal- und Maximaldurchmesser aufweist, wobei die Durchmesser der zweiten Aufnahme größer als die entsprechenden Durchmesser des Splints sind und wobei der Maximaldurchmesser (DM) des Splints größer als der Minimaldurchmesser der zweiten Aufnahme ist, wobei das Halteorgan (11), welches sich an zwei Stellen (11b, 1a) an einem der beiden Teile abstützt und auf den Splint ein elastisches Torsionsmoment um die gemeinsame Achse ausübt, den maximalen Durchmesser (DM) des Splints mit dem minimalen Durchmesser der zweiten Aufnahme auszurichten sucht.

2. Verbindungsvorrichtung nach Anspruch 1, dadurch gekennzeichnet, daß der Federdraht (11) fest mit dem Splint und dem Bügel an einer ersten bzw. einer zweiten Befestigungsstelle (11a, 11b) verbunden ist, die voneinander um einen Teil der Länge dieses Drahts beabstandet sind, der sich wenigstens teilweise entlang einer Richtung erstreckt, die unterschiedlich zur Richtung der gemeinsamen Achse (8) ist, so daß er einer Biegung bei einer aus einer Bremsbetätigung resultierenden Verschiebung des Bügels ausgesetzt ist und diesen am Ende dieser Betätigung zurückstellen kann.

3. Vorrichtung nach Anspruch 2, dadurch gekennzeichnet, daß die erste Befestigungsstelle (11a) durch das Einbringen des Federdrahts in eine Querbohrung (7c) erhalten ist, welche in dem Splint ausgebildet ist.

4. Vorrichtung nach Anspruch 3, dadurch gekennzeichnet, daß der Federdraht am Ausgang der Querbohrung gebogen ist, daß er an dem Bügel an einer Rotationsstelle (1a) anliegt, welche entlang der Länge des Drahts zwischen der ersten und der zweiten Befestigungsstelle angeordnet ist, und daß die zweite Befestigungsstelle in einem Abstand von der Ebene angeordnet ist, die durch die gemeinsame Achse und die Rotationsstelle gebildet ist.

## Claims

1. Device for connecting a yoke (1) and a caliper (2) of a sliding caliper disk-brake, comprising first and second housings (9, 10) of common axis (8) formed respectively in the yoke (1) and the caliper (2), a key (7) inserted axially into the first housing with a relatively small clearance and into the second housing with a relatively large clearance, and a retaining member (11) for the key (7) characterized in that the retaining member is made out of a wire spring and in that the second housing and the key adopt at least partially the form of cylinders with non-circular bases each of which has different minimal and maximal diameters, the diameters of the second housing being greater than the corresponding diameters of the key and the maximal diameter (DM) of the latter being greater than the minimal diameter of the second housing, the retaining member (11), resting on two points (11b, 1a) of one of the two parts and exerting on the key a resilient torsional torque about said common axis, tending to align the maximal diameter (DM) of the key and the minimal diameter of the second housing.

2. Connection device according to Claim 1, characterized in that the wire spring (11) is secured to the key and to the yoke respectively at first and second attachment points (11a, 11b) spaced apart from one another by a portion of length of this wire extending at least partially in a direction different from that of said common axis (8) so as to be subjected to a flexion during a sliding of the caliper resulting from a braking action, and so as thus to be capable of bringing the latter back at the end of this action.

3. Device according to Claim 2, characterized in that the first attachment point (11a) is obtained by inserting the wire spring into a transverse bore (7c) made in the key.

4. Device according to Claim 3, characterized in that the wire spring is angled at the exit from said transverse bore, in that it is pressed onto the yoke at a point of rotation (1a) situated, along the length of this wire, between the first and second attachment points, and in that the second attachment point is situated apart from the plane formed by said common axis and said point of rotation.
